# EUROPEAN PATENT APPLICATION

(11) **EP 2 719 310 A1**
(43) Date of publication of application: **16.04.2014**
(21) Application number: 13186327.6
(22) Date of filing: 27.09.2013
(51) Int. Cl.: A47J 31/36

(54) **Brewing unit**

(30) Priority: 09.10.2012 IT MI20121698
(71) Applicant: F.A.S. International S.p.A., 36015 Schio (Vicenza) (IT)
(72) Inventor: De Meda, Gianni, 36014 Santorso VI (IT)
(74) Representative: Sgobba, Marco

(57) **Abstract**

A brewing unit for beverage preparation in automatic machines comprises a percolation chamber (2) for receiving a powder dose (100), which is permanently engaged by a first piston (3) that moves therein, and a second piston (4) that is movable toward and away from the percolation chamber (2) and operable with the first piston (3) to compress the powder dose, the first piston (3) being adapted to have pressurized hot water flowing therethrough. A containing cavity (6) is adapted to be engaged by the second piston (4) which is rotatable relative to the percolation chamber (2) between a dispensing configuration in which it is aligned with the percolation chamber (2) and the second piston (4) for beverage preparation, and a discharge configuration, in which it is not aligned with the percolation chamber (2) and is aligned with the second piston (4) to discharge a used powder dose.

## Description

### TECHNICAL FIELD

The present invention relates to a brewing unit for the preparation of beverages, such as coffee, in vending machines. As used in the present invention and the accompanying claims, the term brewing is intended to designate the passage of a flow of pressurized hot water, e.g. at about 90°C and 8 atmospheres, through powders, such as ground coffee.

### BACKGROUND OF THE INVENTION

Brewing powders are used in automatic beverage preparation machines. These machines include vending machines for the preparation of beverages for on-demand dispensing, professional coffee machines for use in bars and coffee machines for home use. A typical example of brewing powder that is used in the above mentioned machines is ground coffee, which is used for preparing espresso. Espresso coffee is a beverage obtained by percolation of pressurized hot water through a layer of ground coffee. As water flows through the ground coffee, its pressure drops and the beverage is dispensed at atmospheric pressure. Due to the particularly fine grinding of roasted coffee, the percolation water encounters such a resistance as to allow extraction of aromatic substances that provide creaminess, flavor, body and aftertaste to the beverage. Freshness of the ground blend is of critical importance, as ground coffee tends to oxidize with time, thereby causing the oily substances contained therein to turn rancid, which will affect cream production and alter taste. For this reason, coffee grounds are usually provided in hermetically sealed vacuum containers, to prevent alteration of coffee freshness and its organoleptic properties. Coffee grounds are only taken out of the container when the beverage has to be prepared, to minimize their contact with air.

In automatic machines, coffee grounds are taken out automatically, i.e. by the machine itself, which transfers the powder dose that has been taken out of the container to a brewing unit that forces pressurized hot water through the dose of coffee grounds to prepare the beverage. The powder dose that has been taken out of the container must be compacted before having hot water flow therethrough, for proper flavor extraction from coffee grounds.

In a known type of automatic machines, the brewing unit has two opposed pistons (an upper piston and a lower piston) which move in opposite directions along the same axis. Coffee grounds are fed to a cavity (percolation chamber) in which the above mentioned pistons operate. As these pistons move toward each other, they press the coffee grounds in the cavity and compact them. Then, pressurized hot water is fed through one of the pistons, reaches the cavity and flows through the compacted grounds, thereby extracting coffee. Once coffee has been dispensed, the used powder dose, i.e. the compacted and wet grounds, shall be extracted from the cavity to prepare the latter to the next dispensing operation. Such extraction is usually accomplished by lifting the used dose above the percolation chamber, e.g. by lifting the lower piston and by pushing such dose sideways to drop it into a special container.

During extraction of the used dose, any residue of the used dose must be removed from the percolation chamber, to ensure that only fresh grounds are contained in the percolation chamber during the next dispensing operation. Therefore any residue of the used dose must be totally removed from both the percolation chamber and the areas contiguous thereto.

A further important requirement is that the fresh dose remains in contact with air for as little time as possible, to avoid the above described powder oxidation problem, also during transfer between the powder container and the percolation chamber.

In the light of the above, the technical purpose of the present invention is to provide a brewing unit for beverage preparation in vending machines, that can meet the above requirements.

Particularly, an object of the present invention is to provide a brewing unit for beverage preparation in vending machines, that can ensure optimized beverage dispensing conditions at every dispensing cycle.

### SUMMARY OF THE INVENTION

According to the present invention, the technical purpose and the intended object are fulfilled by a brewing unit for beverage preparation in vending machines as defined by the features of one or more of the annexed claims.

### BRIEF DESCRIPTION OF THE DRAWINGS

The features and advantages of the invention will appear from the following detailed description of an embodiment, which is illustrated without limitation in the annexed drawings, in which:
- Figure 1 shows a perspective view of a brewing unit for beverage preparation in vending machines according to the present invention;
- Figures 2 to 8 show perspective views of certain parts of the unit of Figure 1 in different operating positions, and
- Figure 9 shows a perspective view of the unit of Figure 1, with certain parts omitted to better show other parts.

### DETAILED DESCRIPTION OF THE INVENTION

While reference is made hereinafter to coffee grounds (or ground coffee) as an example of brewing powder, the scope of the invention will not be limited to coffee grounds.

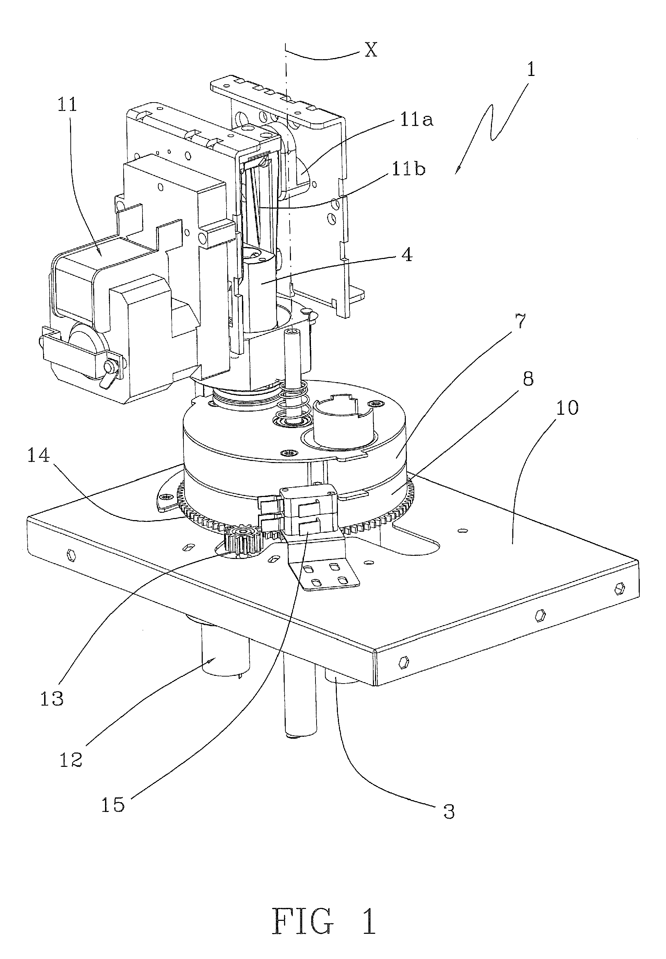

A brewing unit for beverage preparation in vending machine is generally designated by numeral 1 in Figure 1.

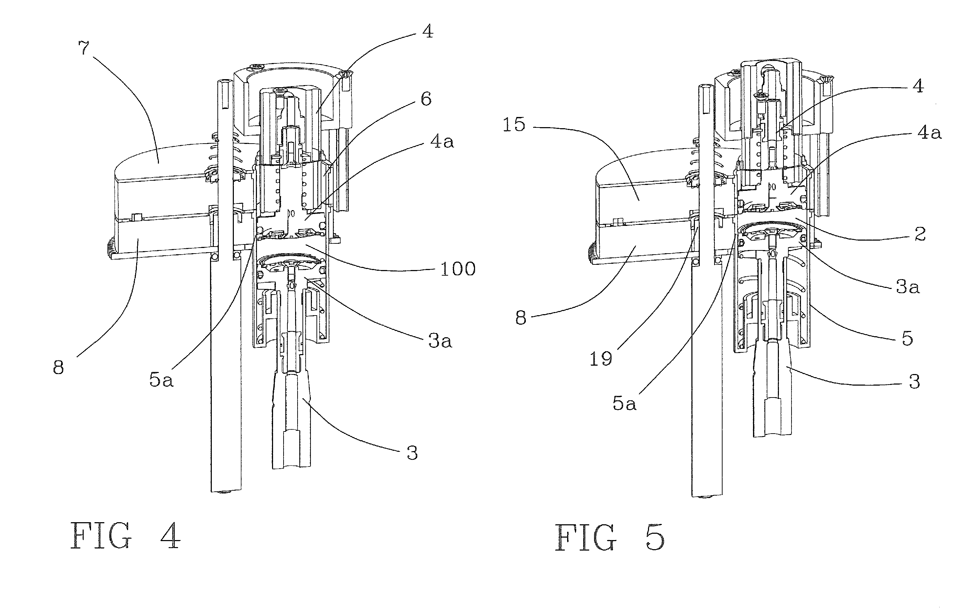

The unit 1 comprises a percolation chamber 2 for receiving a powder dose 100 that is designed to be brewed for beverage extraction. A first piston 3 (the lower piston as seen by a viewer) is permanently operable in the percolation chamber 2, and is capable of translation in the percolation chamber 2. A second piston 4 (the upper piston as seen by a viewer) is movable toward and away from the percolation chamber 2 and has the purpose of cooperating with the first piston 3 for compacting the powder dose. The first 3 and second 4 pistons are capable of translation along respective vertical axes. One of the two pistons, preferably the first piston 3 can receive pressurized hot water therethrough. Particularly, this piston has an inner conduit, which is in fluid communication with a source of pressurized hot water and opens out in the proximity of the head 3a of the piston 3. Pressurized hot water enters the percolation chamber 2 through the head 3a of the piston 3, passes through the powder dose and extracts the beverage. The other piston, i.e. the second piston 4 in the preferred embodiment, has an inner conduit in fluid communication with the piston head 4 and a beverage dispenser. Thus, the beverage extracted in the percolation chamber flows through the second piston 4 and is dispensed. During beverage extraction, the first 3 and second 4 pistons are aligned, i.e. their respective vertical axes of translation are coincident. In the preferred embodiment of the invention, the percolation chamber 2 (as shown in Figure 5) has a substantially cylindrical shape and is defined by an end portion 5 a of a cylinder 5 in which the first piston 3 slides. The head 3a of the latter, as well as the head 4a of the second piston 4 are also substantially cylindrical and their shape mates the shape of the percolation chamber 2 to be able to slide therein. The heads 3a, 4a of the pistons 3, 4 have seals abutting against the inner wall of the percolation chamber 2, such that the water supplied into the percolation chamber, as well as the beverage extracted thereby are not allowed to leak between the percolation chamber 2 and the piston heads.

The unit 1 also comprises a containing cavity 6 for containing the powder dose, which is adapted to engaged by the second piston 4 and the first piston 3,whose purpose will be better explained below. The containing cavity 6 and the percolation chamber 2 are rotatable relative to each other between a dispensing configuration in which the containing cavity 6, the percolation chamber 2 and the second piston 4 are aligned for beverage extraction (as described above) and a discharging configuration in which the containing cavity 6 is not aligned with the percolation chamber 2 and is aligned with the second piston 4 for discharge of the used powder dose, i.e. the powder dose from which the beverage has been extracted. It shall be noted that, in the dispensing configuration, the first piston is also aligned with the containing cavity 6 because, as mentioned above, the first piston 3 always engages the percolation chamber 2. In the discharge configuration, the used power dose is contained in the containing cavity 6 and the second piston 4 is capable of translation in the containing cavity 6 to eject the used dose. The unit 1 is further operable in a powder dose loading configuration. In this configuration, which is obtained by mutual rotation of the percolation chamber 2 and the containing cavity 6, the percolation chamber 2 and the containing cavity 6 are aligned, whereas the second piston is not aligned therewith. In the loading configuration, the containing cavity 6 is in fluid communication with a delivery opening of a powder container, to receive a powder dose.

The containing cavity 6 is located above the percolation chamber 2. The cavity 6 and the percolation chamber 2 are both rotatable about a common axis of rotation X, which is substantially vertical and preferably parallel to the axes of translation of both pistons 3, 4. Preferably, the containing cavity 6 is formed in a first disk 7, and is particularly defined as a through hole that extends through the thickness of the first disk 7. Such first disk 7 is adapted to be rotated about the above mentioned axis of rotation X and the cavity 6 is arranged in an eccentric position relative to the axis of rotation X. Likewise, the percolation chamber 2 extends through the entire thickness of a second disk 8. It shall be noted that the percolation chamber 2 is only formed in the second disk 8, and does not extend through the first disk 7. The second disk 8 is adapted to be rotated about the axis of rotation X and the percolation chamber is attached to the second disk 8 in an eccentric position relative to the axis of rotation X. The eccentricities of the containing cavity 6 and the percolation chamber 2 are identical, which means that the cavity 6 and the percolation chamber 2 lie exactly one above the other when they are aligned. The disks 7, 8 are in parallel and superimposed relationship and, in the dispensing configuration, they expose the percolation chamber 2 to the containing cavity 6. In order that the used powder dose may be discharged, the second disk 8 comprises a discharge through opening 9 which is eccentric to the axis of rotation X and angularly spaced from the percolation chamber 2. In the discharge configuration, the discharge through opening 9 is aligned with the containing cavity 6. The discharge through opening 9 has substantially the same size and shape as the containing cavity 6, such that the second piston 4 may extend therethrough.

As shown in Figure 1, the first 7 and second 8 disks are rotatably supported by a support frame 10 of the unit 1. The frame 10 also has the second piston 4 translatably coupled to the second piston 4. The translation of the second piston 4 is driven by a motor 11, which is attached to the support frame 10. The motor 11 preferably has a rotating shaft 11a extending along an axis perpendicular to the direction of translation of the second piston 4. A crank-slider mechanism 11b is provided between the rotating shaft 11a of the motor 11 and the second piston, and turns the rotary motion of the motor 11 into a reciprocating rectilinear motion of the second piston 4 (thereby allowing it to travel to and from the first 7 and second 8 disks). As mentioned above, the first piston 3 is coupled to the percolation chamber 2 in a manner that allows its translation therein. Therefore, the first piston 3 rotates relative to the support frame 10 and the second piston 4 does not rotate relative to the support frame 10.

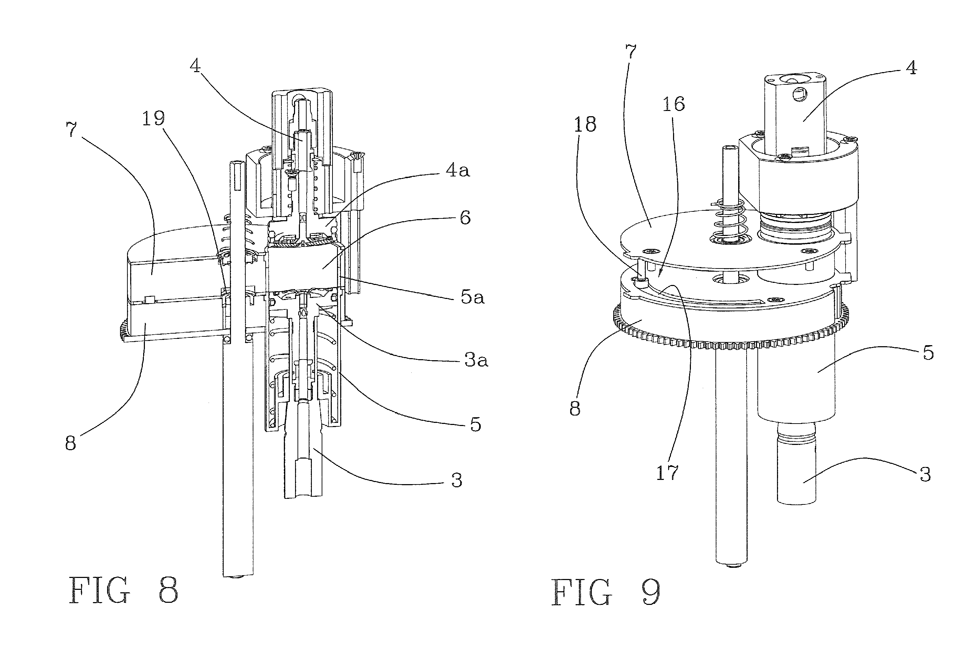

For the first 7 and second 8 disks to rotate relative to the support frame 10, motor members 12 are provided, preferably an electric motor, which are only directly operable on the second disk 8 (the lower disk as seen by a viewer). The electric motor 12 comprises a pinion gear 13 which meshes with a crown wheel 14 surrounding the surface of the second disk 8 and acting as a rack. A position transducer 15 allows instant determination of the angular position of the second disk 8. In the embodiment as shown in the annexed figures, the position transducer 15 consists of two microswitches operable on cavities formed on the outer edges of both disks 7, 8. An encoder operable on the shaft of the motor 12 may be provided instead of or in addition to the microswitches. Coupling members 16 are operable between the second disk 8 and the first disk 7 to at least partially prevent free rotation of one disk relative to the other and allow the second disk 8 to transfer a rotational motion to the first disk 7. Particularly referring to Figure 9, the coupling members 16 comprise a cam 17 formed on the second disk 8 and a cam follower 18 integral with the first disk 7. The cam 17 extends over an arc of a circle whose angular width is substantially equal to the minimum angular distance between the discharge through opening 9 and the percolation chamber 2. The cam follower 18 engages the cam 17 such that, when the second disk 7 is rotated by the motor 12 to switch from the loading configuration to the dispensing configuration, the cam follower 18 abuts a shoulder of the cam 17 and sets the first disk 7 into rotation. When the second disk 8 rotates relative to the first disk 7 to the discharge configuration, the cam follower 18 freely slides in the cam 17, without transferring any motion to the first disk 7. The coupling members 16 further comprise a torsion spring 19, which is operable between the two disks 7, 8 along the axes of rotation X (and whose function will be more clearly explained below). The twisting force exerted by the torsional spring 19 is weaker than the twisting force exerted by the electric motor 12.

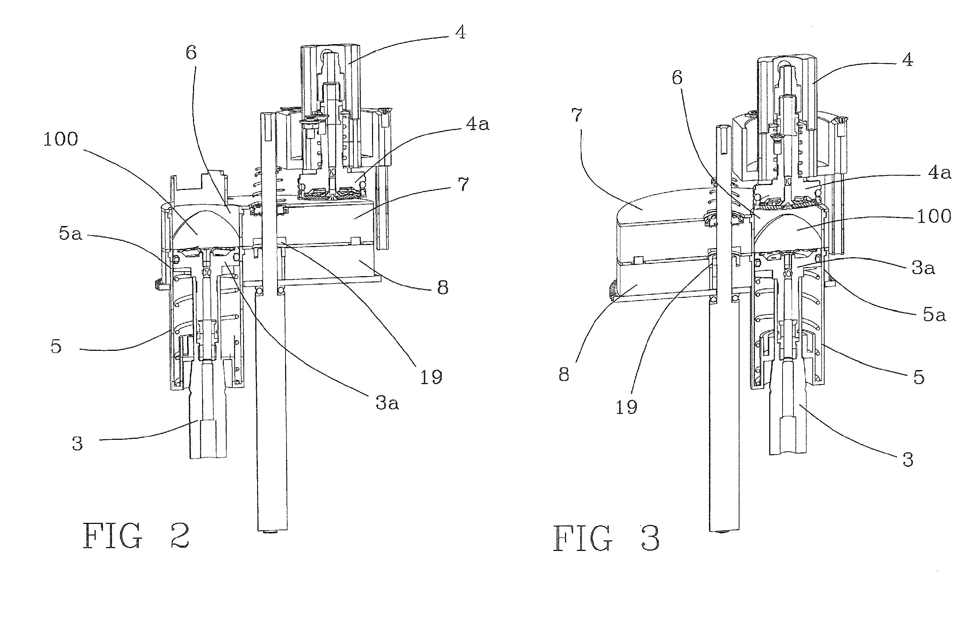

In operation, before starting a beverage preparation and dispensing cycle, the unit 1 is in the loading configuration (see Figure 2), in which the containing cavity 6 is in fluid communication with a brewing powder container and is placed above the percolation chamber. The first piston 3 is inside the percolation chamber 2. The head 3a of the first piston 3 is located at the cavity 6, such that the first piston 3 obstructs the percolation chamber 2. As soon as the dose is released in the containing cavity 6, the percolation chamber 2 and the containing cavity 3 rotate to the position of the second piston 4, i.e. to the dispensing configuration. This rotation is accomplished by rotating the second disk 8 (the one integral with the percolation chamber 2). Rotary motion is imparted to the second disk 8 by the electric motor 12. The cam follower 18 that is integral with the first disk 7 contacts a shoulder of the cam 17, i.e. an end portion of the cam 17. Therefore, the first disk 7 is set into rotation about the axis of rotation X by the cam follower 18 which is driven by the second disk 8. Here, the torsion spring 19 accumulates energy.

As soon as the dispensing configuration (see Figure 3) is reached, the second piston 4 (the upper one) is dropped into the containing cavity 6. As the power dose is being compressed, the compression force of the second piston 4 is transferred to the first piston 3. The latter is translated downwards as soon as such compression force reaches a value that exceeds a predetermined value (e.g. given by a spring, not shown, operable between the head 3a of the first piston 3 and the percolation chamber 2). The second piston 4 enters the percolation chamber 2 and stops its stroke. In this step, as shown in Figure 4, the powder dose is compressed and pressurized hot water starts to flow into the percolation chamber 2 as described above. When dispensing is complete, the second piston 4 is translated away from the percolation chamber (see Figure 5), and the first piston 3 is translated in the percolation chamber 2 toward the containing cavity 6 (e.g. by the action of the above mentioned spring).

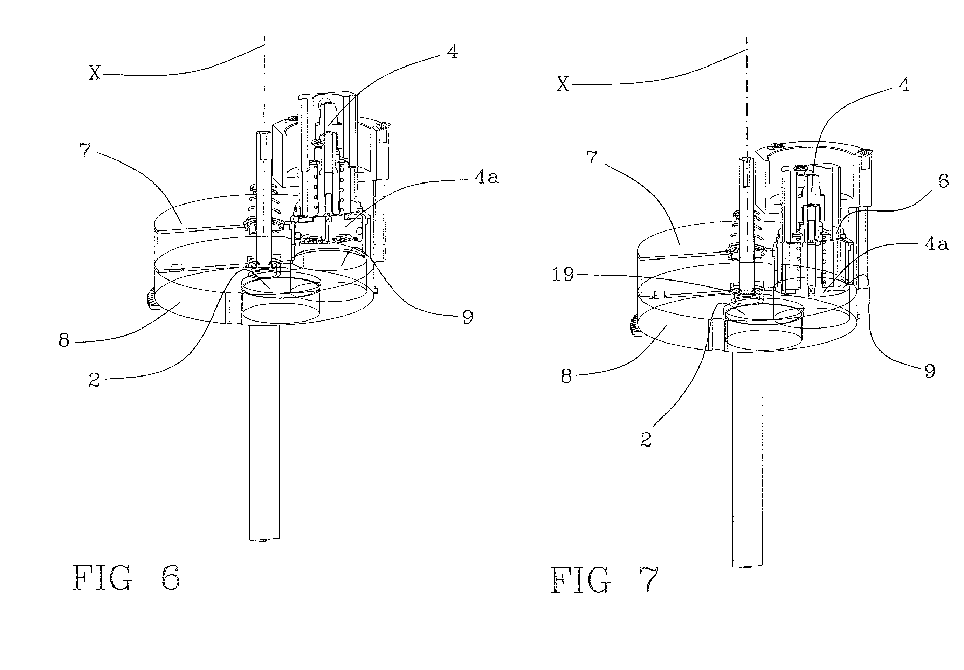

The stroke of the second piston 4 stops when the second piston is engaged in the containing cavity 6. In this position, the used powder dose is also located in the containing cavity 6. The first piston 3 is engaged in the percolation chamber 2. Now, the second disk 8 is rotated until it exposes the discharge through opening 9 to the containing cavity 6 (see Figure 6, which shows the position of the percolation chamber 2). The second disk 8 is rotated by the motor members, particularly the electric motor 12. Such rotation occurs about the axis X, in a direction opposite to the initial rotation that had moved the percolation chamber 2 and the containing cavity 6 below the second piston 4. During rotation of the second disk 8, the first disk 7 does not rotate. The rotation of the first disk 7 is prevented by the second piston 4 that engages the containing cavity 6. The cam 17 allows the second disk 8 to rotate with no interference with the first disk 7, due to free rotation of the cam follower 18 in the cam 17. It shall be noted that the rotation amplitude of the second disk 8 is equal to the angular width of the cam 17.

Now, the second piston 4 enters the discharge through opening 9 and pushes the used powder dose out of the containing cavity 6 and the discharge through opening 9 (see Figure 7). Therefore, the used powder dose is ejected by the unit 1. In this step, as the second piston 4 runs its stroke in the containing cavity 6, it removes any trace of used powder therefrom because, as mentioned above, the shape of the second piston 4 perfectly mates the cavity 6 and exerts a "scraping" action therein.

Once this operation is complete, the second piston 4 rises back into the containing cavity 6 thereby clearing the discharge through opening 9 (in a configuration that coincides with that of Figure 6). The second disk 8 is rotated back about the axis X, and moves the percolation chamber 2 and the first piston 3 to alignment with the containing cavity 6. This rotation has substantially the same amplitude as the rotation that had brought the discharge through opening 9 to alignment with the containing cavity 6, but an opposite direction. Also in this rotation, the cam follower 18 freely slides in the cam 17 and the first disk 7 does not rotate, due to the engagement of the second piston 4 in the cavity 6. It shall be noted that, in this configuration, the cam follower 18 contacts an end shoulder of the cam 17 and the cam 17 extends from such shoulder in the same direction as the direction of the rotation that brought the percolation chamber 2 back to alignment with the containing cavity 6. Now, the second piston 4 is lifted above the containing cavity 6 (see Figure 8).

The second disk 8 is rotated about the axis X to move the percolation chamber 2 and the containing cavity 6 back to the initial configuration (as shown in Figure 2) to start a new dispensing cycle. The rotation of the second disk 8 has a direction opposite to the initial rotation that had brought the percolation chamber 2 and the containing cavity 6 to alignment with the second piston 4. During this final rotation, the first disk 7 rotates in the same direction as the second disk 8, under the action of the torsion spring 19. This torsion spring 19, which is operable between the two disks 7, 8, transfers a torque to the first disk 7, and sets the first disk 7 into rotation about the axis X in the same direction as the rotation of the second disk 8. It will be understood that, during its initial rotation, the torsion spring 19 accumulates energy (to be released during the final rotation).

Those skilled in the art will obviously appreciate that a number of changes and variants may be made to the arrangements as described hereinbefore to meet incidental and specific needs. All of these variants and changes fall within scope of the invention, as defined in the following claims.

## Claims

1. A brewing unit for beverage preparation in vending machines, comprising:
a percolation chamber (2) for receiving a powder dose (100), which is permanently engaged by a first piston (3) moving therein;
a second piston (4) moving toward and away from said percolation chamber (2) and operable with said first piston (3) for compressing said powder dose;
said first (3) or said second piston (4) being adapted to receive hot water preferably pressurized therethrough to ensure water inflow into said percolation chamber (2) and extract a beverage out of said powder dose;
**characterized in that** it comprises a containing cavity (6) for containing said powder dose, which is adapted to be engaged by said second piston (4), said containing cavity (6) and said percolation chamber (2) being rotatable relative to each other at least between a dispensing configuration in which said containing cavity (6), said percolation chamber (2) and said second piston (4) are aligned for beverage preparation and a discharging configuration in which said containing cavity (6) is not aligned with said percolation chamber (2) and is aligned with said second piston (4) for discharge of a used powder dose.

2. A unit as claimed in claim 1, wherein said percolation chamber (2) and said containing chamber (6) are rotatable relative to each other into a loading configuration in which said containing cavity (6) is aligned with said percolation chamber (2) and is not aligned to said second piston (4).

3. A unit as claimed in claim 1 or 2, wherein said containing cavity (6) and said percolation chamber (2) are rotatable about a common axis of rotation (X).

4. A unit as claimed in any preceding claim, comprising a first disk (7) rotatable about an axis of rotation (X), said containing cavity (6) consisting of a through hole in said first disk (7), said containing cavity (6) being eccentric to said axis of rotation (X).

5. A unit as claimed in claim 4, comprising a second disk (8) rotatable about said axis of rotation (X), said percolation chamber (2) extending through said second disk (8) as eccentric to said axis of rotation (X) as the containing cavity (6) to the axis of rotation (X).

6. A unit as claimed in claim 5, wherein said second disk (8) comprises a discharge through opening (9), which is eccentric to said axis of rotation (X) and angularly spaced from said percolation chamber (2); said discharge through opening (9) being aligned with said containing cavity (6) in said discharge configuration.

7. A unit as claimed in claim 5 or 6, wherein said first (7) and second (8) disks are in overlapped relationship, motor members (12) being only operable on the first (7) or the second (8) disk, and restraining members (16) being operable between said first (7) and second (8) disks to at least partially prevent free rotation of one disk relative to the other.

8. A unit as claimed in claim 7, wherein said restraining members (16) comprise a cam (17) formed in the first (7) or the second (8) disk and a cam follower (18) integral with the second (8) or the first (7) disk and a torsion spring (19) operable on the first (7) and/or the second (8) disk, said torsion spring (19) exerting a torque about said axis of rotation (X).

9. A unit as claimed in claim 8, wherein said cam (17) extends along an arc of a circle, whose amplitude substantially equals the angular distance between the percolation chamber (2) and the discharge through opening (9).

10. A unit as claimed in any of claims 5 to 9, wherein as said second piston (4) moves from the dispensing configuration to the discharging configuration, it engages said containing cavity (6).

11. A unit as claimed in any of claims 5 to 10, wherein in the discharging configuration said second piston (4) extends through said containing cavity (6) and said discharge through opening (9).
